(19) Europäisches Patentamt
European Patent Office
Office européen des brevets

(11) **EP 1 794 967 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(21) Anmeldenummer: **05794710.3**

(22) Anmeldetag: **27.09.2005**

(51) Int Cl.:
*H04L 27/233* (2006.01)     *H04L 27/20* (2006.01)

(86) Internationale Anmeldenummer:
**PCT/EP2005/010435**

(87) Internationale Veröffentlichungsnummer:
**WO 2006/034845 (06.04.2006 Gazette 2006/14)**

(54) **VERFAHREN UND VORRICHTUNG ZUR TRÄGERFREQUENZSYNCHRONISIERUNG EINES OFFSET-QUADRATURPHASENMODULIERTEN SIGNALS**

METHOD AND DEVICE FOR SYNCHRONISING THE CARRIER FREQUENCY OF AN OFFSET QUADRATURE PHASE-MODULATED SIGNAL

PROCEDE ET DISPOSITIF POUR SYNCHRONISER LA FREQUENCE PORTEUSE D'UN SIGNAL MODULE EN QUADRATURE DE PHASE A DECALAGE

(84) Benannte Vertragsstaaten:
**DE FR GB**

(30) Priorität: **28.09.2004 DE 102004047034**
**01.12.2004 DE 102004058015**
**22.12.2004 DE 102004061857**

(43) Veröffentlichungstag der Anmeldung:
**13.06.2007 Patentblatt 2007/24**

(73) Patentinhaber: **Rohde & Schwarz GmbH & Co. KG**
**81671 München (DE)**

(72) Erfinder: **SCHMIDT, Kurt**
**85567 Grafing (DE)**

(74) Vertreter: **Körfer, Thomas et al**
**Mitscherlich & Partner**
**Patent- und Rechtsanwälte**
**Postfach 33 06 09**
**80066 München (DE)**

(56) Entgegenhaltungen:
DE-A1- 10 309 262     US-B1- 6 775 334

EP 1 794 967 B1

**Beschreibung**

Die Erfindung betrifft ein Verfahren und eine Vorrichtung zur Trägerfrequenzsynchronisierung bei einem Offset-Quadraturphasenmodulierten Signal.

Werden Sender und Empfänger in einem Übertragungssystem zueinander synchronisiert, so erfolgt eine sender- und empfängerseitige Angleichung des Takt- und Trägersignals jeweils hinsichtlich Phasenlage und Frequenz. Die im folgenden zu betrachtende Trägerfrequenzsynchronisierung setzt ein hinsichtlich des Taktsignals synchronisiertes Empfangssignal voraus

In der Druckschrift DE 103 09 262 A1 ist ein Verfahren zur Trägerfrequenzsynchronisierung eines Signals mit digitalen Symbolfolgen beschrieben, bei dem der Frequenz- und/oder Phasenversatz des Trägersignals aus dem demodulierten Empfangssignal mittels Maximum-Likelihood-Schätzung geschätzt wird. Das die digitale Symbolfolge enthaltende Empfangssignal besteht aus zu den einzelnen Abtastzeitpunkten gehörigen komplexen Drehzeigern, deren diskrete Phasen einzig vom gesuchten Frequenz- und/oder Phasenversatz des Trägersignals und deren diskrete Amplituden einzig von den digitalen Symbolwerten des demodulierten Empfangssignals abhängen. Die Maximum-Likelihood-Schätzung des gesuchten Frequenz- und/oder Phasenversatzes des Trägersignals erfolgt durch Maximierung der Likelihood-Funktion, die aus der Summe der Realteile aller zeitdiskreten komplexen Drehzeiger des Empfangssignals gebildet wird. Die Maximierung der Likelihood-Funktion erfolgt, indem für jeden Abtastzeitpunkt der zugehörige komplexe Drehzeiger des Empfangssignals in Höhe des gesuchten Frequenz- und/oder Phasenversatzes im Uhrzeigersinn gedreht wird und damit auf der Realachse zu liegen kommt. Auf diese Weise ist es möglich, durch eine getrennt für den Frequenz- und/oder Phasenversatz durchzuführende Extremwertbetrachtung der Likelihood-Funktion den gesuchten Frequenz- und/oder Phasenversatz des Trägersignals zu gewinnen.

Das zeitdiskrete Empfangssignal in der Druckschrift DE 103 09 262 A1 weist je Abtastzeitpunkt jeweils einen komplexen Drehzeiger auf, dessen Phasenwert einzig vom Frequenz- und/oder Phasenversatz des Trägersignals und dessen Amplitudenwert vom zum jeweiligen Abtastzeitpunkt zu übertragenden Symbolwert der empfangenen Signalfolge abhängen. Ein derartiges zeitdiskretes Empfangssignal basiert auf einer vergleichsweise einfachen Modulation, beispielsweise einer konventionellen binären Phasentastung (BPSK). Wird dagegen ein komplexeres Modulationsverfahren, insbesondere eine Offset-Quadraturphasenmodulation (Offset-QPSK-Modulation), eingesetzt, so ergeben sich im Empfangssignal aufgrund der Quadrierung wie auch aufgrund der Phasenverschiebung der Inphase- zur Quadraturkomponente in Höhe einer halben Symbolperiode im Falle einer Offset-QPSK-Modulation erhebliche Intersymbol-Interferenzen, die die Phasen der zeitdiskreten komplexen Drehzeiger zusätzlich stören. Somit sind die Phasen der zeitdiskreten komplexen Drehzeiger des Empfangssignals nicht nur vom Frequenz- und/oder Phasenversatz des Trägersignals abhängig. Die Anwendung einer Maximum-Likelihood-Schätzung zur Schätzung des gesuchten Frequenz- und/oder Phasenversatzes des Trägersignals im Sinne des Verfahrens und der Vorrichtung, welche aus der Druckschrift DE 103 09 262 A1 bekannt sind, ist in diesem Falle nicht zielführend.

Der Erfindung liegt deshalb die Aufgabe zugrunde, ein Verfahren und eine Vorrichtung zur Schätzung des Frequenz- und/oder Phasenversatzes im Trägersignal bei einem Offset-Quadraturphasenmodulierten Empfangssignal unter Zuhilfenahme der Maximum-Likelihood-Schätzung zu schaffen.

Die Aufgabe der Erfindung wird durch ein Verfahren zur Trägerfrequenzsynchronisieriang mit den Merkmalen des Anspruchs 1 und durch eine Vorrichtung zur Trägerfrequenzsynchronisierung mit den Merkmalen des Anspruchs 7 gelöst. Weiterbildungen der Erfindung sind in den abhängigen Ansprüchen aufgeführt.

Das Offset-Quadraturphasenmodulierte Empfangssignal wird nach einer Demodulation, einer Abtastung mit einem Oversampling-Faktor von typischerweise acht und einer Vorfilterung mit einem signalangepaßten Vorfilter erfindungsgemäß in drei aufeinander folgenden Signalverarbeitungsschritten zu einem modifizierten Empfangssignal umgeformt, dessen zeitdiskrete komplexe Drehzeiger jeweils Phasen aufweisen, die einzig vom Frequenz- und/oder Phasenversatz des benutzten Trägersignals abhängen.

Beim ersten Signalverarbeitungsschritt handelt es sich um eine weitere Abtastung, die ein zeitdiskretes Empfangssignal mit zwei Abtastwerten pro Symbolperiode erzeugt. Dieses somit neu abgetastete Empfangssignal enthält in seinen diskreten komplexen Drehzeigern jeweils eine zusätzliche, vom jeweiligen Abtastzeitpunkt abhängige Phase, die im darauffolgenden zweiten Signalverarbeitungsschritt im Rahmen einer komplexen Multiplikation mit einem komplexen Drehzeiger mit einer dazu inversen Phase kompensiert wird. Das von seiner zusätzlichen Phase in jeweiligen zeitdiskreten komplexen Drehzeiger befreite Empfangssignal wird schließlich in einem dritten Signalverarbeitungsschritt einer betragsnormierten Quadrierung unterzogen, um sicherzustellen, daß die Amplitude jedes zeitdiskreten komplexen Drehzeigers des somit modifizierten Empfangssignals einen positiven Wert aufweist.

Somit wird aus dem Offset-Quaciraturphasenmodulierten Empfangssignal durch das erfindungsgemäße Verfahren und die erfindungsgemäße Vorrichtung zur Trägerfrequenzsynchronisierung eine modifiziertes Empfangssignal gebildet, dessen zeitdiskrete komplexe Drehzeiger jeweils Phasen aufwei-sen, die einzig vom Frequenz- und/oder Phasenversatz des benutzten Trägersignals abhängig sind.

Über eine Argumentfunktion werden daraufhin die zeitdiskreten Phasen des modifizierten zeitdiskreten Empfangssignals ermittelt und daraus ein Phasenverlauf gebildet. Dieser über die Periode 2·π periodische und nicht-stetige Phasenverlauf des modifizierten Empfangssignals wird anschließend an den Unstetigkeitsstellen zu einem phasenkontinuierlichen Phasenverlauf des modifizierten Empfangssignals "verstetigt".

Ein auf diese Weise erzeugter phasenkontinuierlicher Phasenverlauf eines modifiziertes Offset-Quadraturphasenmodulierten Empfangssignals kann ziel führend einer Maximum-Likelihood-Schätzung im Sinne der DE 103 09 262 A1 unterzogen werden, um einen im benutzten Trägersignal eventuell auftretenden Frequenz- und/oder Phasenversatz für eine anschließende Trägerfrequenzsynchronisierung des Empfangssignals zu ermitteln.

Eine bevorzugte Ausführungsform des erfindungsgemäßen Verfahrens zur Trägerfrequenzsynchronisierung und der erfindungsgemäßen Vorrichtung zur Trägerfrequenzsynchronisierung werden im folgenden unter Berücksichtigung der Zeichnung näher erläutert. In der Zeichnung zeigen:

Fig. 1    ein erweitertes Blockschaltbild des Übertragungssystems,

Fig. 2    ein reduziertes Blockschaltbild des Übertragungssystems,

Fig. 3    ein Blockschaltbild der erfindungsgemäße Vorrichtung zur Trägerfrequenzsynchronisierung,

Fig. 4    ein komplexes Zeigerdiagramm eines erfindungsgemäß modifizierten Empfangssignals,

Fig. 5    einen Zeitverlauf eines nicht-stetigen und eines "verstetigen" phasenkontinuierlichen Phasenverlaufs eines erfindungsgemäß modifizierten Empfangssignals und

Fig. 6    ein Flußdiagramm des erfindungsg-emäßen Verfahrens zur Trägerfrequenzsynchronisierung.

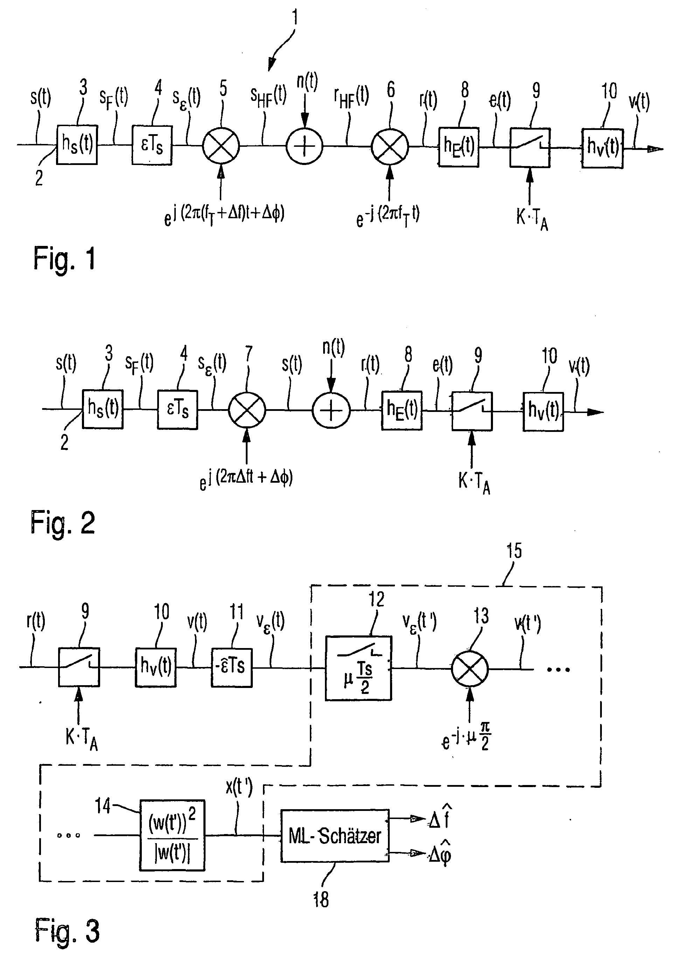

Bevor anhand der Fig. 3 bis 6 der Zeichnung eine Ausführungsform des erfindungsgemäßen Verfahrens und der erfindungsgemäßen Vorrichtung zur Trägerfrequenzsynchronisierung bei einem Offset-QPSK-Signal im Detail beschrieben werden, erfolgt im folgenden eine Herleitung der dafür erforderlichen mathematischen Grundlagen.

Ausgangspunkt ist ein komplexes Basisbandmodell eines Übertragungssystems 1 für zeitkontinuierliche komplexe Signale, dessen erweitertes Blockschaltbild in Fig. 1. dargestellt ist.

Am Eingang 2 des Übertragungssystems 1 wird die zu übertragende komplexe Symbolfolge s(t) eines Offset-QPSK-Signals gemäß Gleichung (1) angelegt:

$$s(t) = \sum_{n=-\infty}^{+\infty} a_R(n) \cdot \delta(t - nT_s) + j \cdot \sum_{n=-\infty}^{+\infty} a_I(n) \cdot \delta(t - nT_s) \qquad (1)$$

Hierbei stellen die $a_R(n)$ und $a_I(n)$ Symbolwerte für -die zu erzeugenden Inphase- und Quadraturkomponenten des Offset-QPSK-Sendesignals dar, welche beispielsweise die reellen Werte $\{\pm s_i\}$ des Symbolalphabets annehmen können. Die Symbolfolgen der Inphase- und Quadraturkomponente sind jeweils hinsichtlich der Symbollänge $T_s$ periodisch. Systemtheoretisch wird die zu übertragende Symbolfolge s(t) im Senderfilter 3 mit dessen Impulsantwort $h_s(t)$ gefaltet und liefert die gefilterte Symbolfolge $s_f(t)$ am Ausgang des Senderfilters 3 gemäß Gleichung (2) :

$$s_F(t) = \sum_{n=-\infty}^{+\infty} a_R(n) \cdot h_s(t - nT_s) + j \cdot \sum_{n=-\infty}^{+\infty} a_I(n) \cdot h_s(t - nT_s) \qquad (2)$$

Das nachfolgende Totzeitglied 4 modelliert den durch die fehlende oder ungenügende Synchronisierung zwischen Sender und Empfänger auftretenden Zeitversatz $\varepsilon \cdot T_s$, der aus einem Timingversatz $\varepsilon$ hervorgeht. Der Timingversatz $\varepsilon$ kann dabei positive und negative Werte typischerweise zwischen $\pm 0{,}5$ annehmen. Die den Zeitversatz $\varepsilon \cdot T_s$ berücksichtigende, gefilterte Symbolfolge $S_\varepsilon(t)$ am Ausgang des Totzeitglieds 4 ergibt sich somit gemäß Gleichung (3):

$$s_\varepsilon(t) = \sum_{n=-\infty}^{+\infty} a_R(n) \cdot h_S(t - \varepsilon T_S - nT_S) + j \cdot \sum_{n=-\infty}^{+\infty} a_I(n) \cdot h_S(t - \varepsilon T_S - nT_S) \qquad (3)$$

Die totzeitbehaftete, gefilterte Symbolfolge $s_\varepsilon(t)$ wird in einem Offset-QPSK-Modulator - als Multiplizierer 5 in Fig. 1 modelliert - mit einem komplexen Trägersignal $e^{j(2\pi(f_T+\Delta f)t+\Delta\varphi)}$ zu einem Offset-QPSK-modulierten Sendesignal $S_{HF}(t)$ gemischt. Das Trägersignal $e^{j(2\pi(f_T+\Delta f)t+\Delta\varphi)}$ besitzt eine Trägerfrequenz $f_T$, die aufgrund fehlender Trägerfrequenz-synchronisierung einen Frequenzversatz $\Delta f$ und Phasenversatz $\Delta\varphi$ aufweist. Ohne Berücksichtigung von Signalfehlern des Quadratur-Modulator - beispielsweise Übersprechen des Trägersignals auf den Inphase- bzw. Quadratur-Kanal, Gain-Imbalance zwischen Inphase- und Quadratur-Kanals, Quadraturfehler zwischen Inphase- zum Quadraturkanal -, ergibt sich der in Gleichung (4) dargestellte mathematische Zusammenhang des Offset-QPSK-modulierten Sendesignal $s_{HF}(t)$:

$$s_{HF}(t) = \left[ \begin{array}{l} \displaystyle\sum_{n=-\infty}^{+\infty} a_R(n) \cdot h_S(t - \varepsilon T_S - nT_S) + \\[2ex] + j \cdot \displaystyle\sum_{n=-\infty}^{+\infty} a_I(n) \cdot h_S\left(t - \varepsilon T_S - \frac{T_S}{2} - nT_S\right) \end{array} \right] \cdot e^{j(2\pi(f_T+\Delta f)t+\Delta\varphi)} \qquad (4)$$

Die Symbolfolge der Inphasekomponente ist gegenüber der Symbolfolge der Quadraturkomponente des Offset-QPSK-modulierten Sendesignals $s_{HF}(t)$ um eine Symbolperiode phasenversetzt.

Auf der Übertragungsstrecke zwischen Sender und Empfänger wird dem Offset-QPSK-modulierten Sendesignal $S_{HF}(t)$ ein additives weißes Gaußverteiltes Rauschen (AWGN) n(t) additiv überlagert, das nach Gleichung (5) eine reelle und imaginäre Komponente $n_R(t)$ und $n_I(t)$ aufweist.

$$n(t) = n_R(t) + j \cdot n_I(t) \qquad (5)$$

Das im Empfänger eintreffende Empfangssignal $r_{HF}(t)$ ergibt sich folglich aus Gleichung (6):

$$r_{HF}(t) = s_{HF}(t) + n(t) \qquad (6)$$

Im Empfänger wird das mit einem Rauschen n(t) überlagerte Offset-QPSK-modulierte Empfangssignal $r_{HF}(t)$ in einem Demodulator - als Multiplizierer 6 in Fig. 1 modelliert - mit dem Trägersignal $e^{-j2\pi f_T t}$ in das Basisband heruntergemischt. Das demodulierte Empfangssignal r(t) am Ausgang des Demodulators 6, das eine mit dem Frequenz- und Phasenversatz des Trägersignals verzerrte Inphase- und Quadratur-Symbolfolge enthält, ergibt sich entsprechend Gleichung (7):

$$r(t) = s_\varepsilon(t) \cdot e^{j(2\pi\Delta f + \Delta\varphi)} + n(t) =$$

$$= \left[ \sum_{n=-\infty}^{+\infty} a_R(n) \cdot h_S(t - \varepsilon T_S - nT_S) + j \cdot \sum_{n=-\infty}^{+\infty} a_I(n) \cdot h_S\left(t - \varepsilon T_S - \frac{T_S}{2} - nT_S\right) \right] \cdot e^{j(2\pi\Delta f t + \Delta\varphi)} + n(t)$$

$$(7)$$

Wie aus Gleichung (7) ersichtlich ist, heben sich die systemtheoretischen Wirkungen des Modulators 5 und des Demodulators 6 des Übertragungssystems 1 auf das Offset-QPSK-modulierte Signal teilweise auf, so daß der Modulator 5 und der Demodulator 6 in Fig. 1 durch einen einzigen Multiplizierer 7 gemäß dem reduzierten Blockschaltbild in Fig. 2 ersetzt werden kann, der die totzeitbehaftete, gefilterte Symbolfolge $s_\varepsilon(t)$ mit einem Signal $e^{j(2\pi\Delta ft+\Delta\varphi)}$ gemäß Gleichung (8) zu einem Sendesignal $S_{NF}(t)$ im Basisband mischt.

$$s_{NF}(t) = \left[ \sum_{n=-\infty}^{+\infty} a_R(n) \cdot h_S(t - \varepsilon T_S - nT_S) + j \cdot \sum_{n=-\infty}^{+\infty} a_I(n) \cdot h_S(t - \varepsilon T_S - \frac{T_S}{2} - nT_S) \right] \cdot e^{j(2\pi\Delta ft+\Delta\varphi)}$$

$$(8)$$

Das mit dem additiven weißen, gaußverteilten Rauschen n(t) additiv überlagerte Sendesignal s(t) gemäß dem reduzierten Blockschaltbild in Fig. 2 wird im Empfänger als Empfangssignal r(t) empfangen, das dem Empfangssignal gemäß Gleichung (7) des erweiterten Blockschaltbilds im Sinne von Fig. 1 entspricht.

Das Empfangssignal r(t) wird im Empfängerfilter 8 gemäß Gleichung (9) mit dessen Impulsantwort $h_E(t)$ gefaltet und führt am Ausgang des Empfängerfilters 8 zum Signal e(t), das eine gefilterte und bzgl. Signalfehler und Frequenz- und Phasenversatz verzerrte Inphase- und Quadratur-Symbolfolge darstellt:

$$e(t) = r(t) * h_E(t) \qquad (9)$$

Das Empfangssignal r(t) wird vom Empfangsfilter 8 mit der Impulsantwort $h_E(t)$ gefiltert und liefert an seinem Ausgang das gefilterte Empfangssignal e(t). Bei dem Empfangsfilter 8 handelt es sich um ein signalangepaßtes (matched-) Filter. Ein signalangepaßtes Filter weist gemäß Gleichung (10) ein zur Impulsantwort $h_S(t)$ des Senderfilters 3 korrespondierende Impulsantwort $h_E(t)$ und gemäß Gleichung (11) entsprechend ein zur Übertragungsfunktion $H_S(f)$ gespiegelte Übertragungsfunktion $H_E(f)$ auf.

$$h_E(t) = h_S(-t) \qquad (10)$$

$$H_E(f) = H_S(-f) \qquad (11)$$

Auf diese Weise wird der Signal-Rauschabstand des gefilterten Empfang-signals e(t) als Verhältnis der Nutzleistung zur Störleistung maximiert.

Im Anschluß an das Empfangsfilter 8 erfolgt in einem im folgenden als zweites Abtast- und Halteglied bezeichneten Abtast- und Halteglied 9 eine Abtastung des gefilterten Empfangssignals mit einer Abtastrate $f_A$, die gegenüber der Symbolfrequenz $f_S$ des Empfangssignals r(t) um den Oversamplingfaktor os erhöht ist. Der Oversamplingfaktor os weist dabei, wie in [1]: K.Schmidt: "Digitale Taktrückgewinnung für bandbreiteneffiziente Mobilfunksysteme", 1994, ISBN 3-18-14 7510-6, im Detail gezeigt, einen Wert von 8 auf.

Nach der Abtastung des gefilterten Empfangsignals e(t) erfolgt eine weitere Vorfilterung des Signals in einem Vorfilter 10. Das Vorfilter 10 hat die Aufgabe, datenabhängige Jitter im Signal zu minimieren. Hierzu werden das Frequenzspektrum $H_E(f)$ des Empfangsfilters 8 mit dem Frequenzspektrum $H_V(f)$ des Vorfilters 10 gemäß Gleichung (12) zu einem gemeinsamen Frequenzspektrum $H_{EV}(f)$ multiplikativ verknüpft:

$$H_{EV}(f) = H_E(f) \cdot H_V(f) \qquad (12)$$

Weist das Senderfilter 3 gemäß Gleichung (13) ein Frequenzspektrum $H_S(f)$ auf, das einem Wurzel-Kosinus-Filter mit einem Roll-Off-Faktor r entspricht, so muß das gemeinsame Frequenzspektrum $H_{EV}(f)$ des Empfangsfilters 8 und des Vorfilters 10 gemäß Gleichung (14) in Abhängigkeit des Frequenzspektrum $H_S(f)$ des Senderfilters 3 ausgelegt werden, um , wie in [1] gezeigt, datenabhängige Jitter im Empfangssignal r(t) zu minimieren.

$$H_s(f) = \begin{cases} 1 & \text{für } |f| < \dfrac{f_s}{2} \\ \cos\left[\dfrac{\pi|f|}{2rf_s} - \dfrac{\pi(1-r)}{4r}\right] & \text{für}(1-r)\dfrac{f_s}{2} < |f| \leq (1+r)\dfrac{f_s}{2} \\ 0 & \text{für}(1+r)\dfrac{f_s}{2} < |f| \end{cases} \quad (13)$$

$$H_{EV}(f) = \begin{cases} H_s(f-f_s) + H_s(f+f_s) & \text{für } |f| \leq \dfrac{f_s}{2}(1+r) \\ \text{beliebig} & \text{für } \dfrac{f_s}{2}(1+r) < |f| \leq f_s \\ 0 & \text{für } f_s < |f| \end{cases} \quad (14)$$

Der Frequenzgang $H_{GES}(f)$ kann gemäß Gleichung (15) als ein zur Frequenz f=0 symmetrisches Tiefpaßfilter $H_{GES0}(f)$ mit einer Bandbreite von $\dfrac{f_s}{2} \cdot r$, das jeweils um $\pm\dfrac{f_s}{2}$ frequenzverschoben ist, interpretiert werden:

$$H_{GES}(f) = H_{GES0}(f) * \left(\delta(f - \dfrac{f_s}{2}) + \delta(f + \dfrac{f_s}{2})\right) =$$
$$= H_{GES0}(f - \dfrac{f_s}{2}) + H_{GES0}(f + \dfrac{f_s}{2}) \quad (15)$$

Die korrespondierende Impulsantwort $h_{GES}(t)$ ergibt sich demnach gemäß Gleichung (16):

$$h_{GES}(t) = h_{GES0}(t) \cdot \left(e^{j2\pi\frac{f_s}{2}t} + e^{-j2\pi\frac{f_s}{2}t}\right) = h_{GES0}(t) \cdot \cos\left(2\pi\dfrac{f_s}{2}t\right) \quad (16)$$

Das Signal v(t) am Ausgang des Vorfilters 10 kann somit gemäß Gleichung (17) dadurch gewonnen werden, daß im Sendersignal $s_{NF}(t)$ im Basisband nach Gleichung (8) die Impulsantwort $h_S(t)$ des Senderfilters 3 durch die Impulsantwort $h_{GES}(t)$ des Gesamtübertragungssystems ersetzt wird:

$$v(t) = s_{NF}(t) * h_{GES}(t) =$$

$$\left[ \sum_{n=-\infty}^{+\infty} a_R(n) \cdot h_{GES}(t - \varepsilon T_S - nT_S) + j \cdot \sum_{n=-\infty}^{+\infty} a_I(n) \cdot h_{GES}(t - \varepsilon T_S - \frac{T_S}{2} - nT_S) \right] \cdot e^{j(2\pi\Delta ft + \Delta\varphi)}$$

$$(17)$$

Die Impulsanwort $h_{GES}(t\text{-}\varepsilon T_S\text{-}nT_S)$ kann ausgehend von Gleichung (16) gemäß Gleichung (18) beschrieben werden:

$$h_{GES}(t - \varepsilon T_S - nT_S) = h_{GES0}(t - \varepsilon T_S - nT_S) \cdot (-1)^n \cdot \cos(2\pi\frac{f_S}{2}(t - \varepsilon T_S)) \qquad (18)$$

Analog kann für die Impulsantwort $h_{GES}(t - \varepsilon T_S - \frac{T_S}{2} - nT_S)$ die mathematische Beziehung in Gleichung (19) ermittelt werden.

$$h_{GES}(t - \varepsilon T_S - \frac{T_S}{2} - nT_S) = h_{GES0}(t - \varepsilon T_S - \frac{T_S}{2} - nT_S) \cdot (-1)^n \cdot \sin(2\pi\frac{f_S}{2}(t - \varepsilon T_S))$$

$$(19)$$

Auf der Basis der mathematischen Terme in den Gleichungen (18) und (19) können die Zusammenfassungen in Gleichung (20) und (21) aufgestellt und damit der mathematische Zusammenhang für das Ausgangssignal v(t) des Vorfilters 10 bei Anregung des Übertragungssystems 1 mit einem Offset-QPSK-Signal s(t) von Gleichung (17) nach Gleichung (22) übergeführt werden.

$$R(t) = \sum_{n=-\infty}^{+\infty} a_R(n) \cdot h_{GES0}(t - \varepsilon T_S - nT_S) \cdot (-1)^n \qquad (20)$$

$$I(t) = \sum_{n=-\infty}^{+\infty} a_I(n) \cdot h_{GES0}(t - \varepsilon T_S - \frac{T_S}{2} - nT_S) \cdot (-1)^n \qquad (21)$$

$$v(t) = \left[ R(t) \cdot \cos(2\pi\frac{f_S}{2}(t - \varepsilon T_S)) + j \cdot I(t) \cdot \sin(2\pi\frac{f_S}{2}(t - \varepsilon T_S)) \right] \cdot e^{j(2\pi\Delta ft + \Delta\varphi)}$$

$$(22)$$

Das Signal v(t) am Ausgang des Vorfilters 10 gemäß Gleichung (22) wird in einer nachfolgenden Verzögerungseinheit 11 um den Zeitversatz $-\hat{\varepsilon} \cdot T_S$ verzögert. Der geschätzte Timingversatz $\hat{\varepsilon}$, der von einer hier nicht dargestellten Schätz-Einheit zur Schätzung des Timingversatzes $\hat{\varepsilon}$ eines Offset-QPSK-modulierten Signals ermittelt wird, entspricht bei optimaler Taktsynchronisierung dem tatsächlichen Timingversatz E des Offset-QPSK-modulierten Signals v(t). In diesem Fall ist das Ausgangssignal $v_\varepsilon(t)$ der Verzögerungseinheit 11 gemäß Gleichung (23) vollständig von seinem zeitversatz befreit.

$$v_\varepsilon(t) = \left[ R_\varepsilon(t) \cdot \cos\left(2\pi \frac{f_S}{2} \cdot t\right) + j \cdot I_\varepsilon(t) \cdot \sin\left(2\pi \frac{f_S}{2} \cdot t\right)\right] \cdot e^{j(2\pi\Delta f \cdot t + \Delta\phi)} \qquad (23)$$

Die zugehörigen vom Zeitversatz $\varepsilon \cdot T_s$ befreiten Zusammenfassungen $R_\varepsilon(t)$ und $I_\varepsilon(t)$ ergeben sich gemäß Gleichung (24) und (25) :

$$R_\varepsilon(t) = \sum_{n=-\infty}^{+\infty} a_R(n) \cdot h_{GES0}(t - nT_S) \cdot (-1)^n \qquad (24)$$

$$I_\varepsilon(t) = \sum_{n=-\infty}^{+\infty} a_I(n) \cdot h_{GES0}(t - \frac{T_S}{2} - nT_S) \cdot (-1)^n \qquad (25)$$

Aus den Gleichungen (23), (24) und (25) ist ersichtlich, daß das zeitsynchronisierte Empfangssignal $v_\varepsilon(t)$ nicht die für eine Anwendung des Maximum-Likelihood-Verfahrens zur Bestimmung des Frequenzversatz- und Phasenversatzschätzwertes $\Delta\hat{f}$ und $\Delta\hat{\phi}$ erforderliche zeitdiskrete Form gemäß Gleichung (26) aufweist:

$$r(t') = |r(t')| \cdot e^{j(2\pi\Delta f t' + \Delta\phi)} \qquad (26)$$

Insofern wird das zeitsynchronisierte Empfangssignal $v_\varepsilon(t)$ erfindungsgemäß, wie im folgenden gezeigt wird, in eine der Gleichung (26) entsprechenden Form umgeformt.

Betrachtet man hierzu das Ausgangssignal $v_\varepsilon(t)$ der Verzögerungseinheit 11 nur zu den diskreten Zeitpunkten $t' = \mu \cdot \dfrac{T_S}{2}$ ($\mu$=0,1,2,...2·N-1), so setzt sich das Ausgangssignal $v_\varepsilon(t')$ der Verzögerungseinheit 11 gemäß der Gleichungen (27a), (27b), (27c) und (27d) je nach betrachteten Zeitpunkt nur aus einem rein reellen oder rein imaginären Anteil und einem komplexen Drehzeiger $e^{j(2\pi\Delta f \cdot t' + \Delta\phi)}$ zusammen:

$$t' = 0 \cdot \frac{T_S}{2} : \quad v_\varepsilon(t') = \left[R_\varepsilon(t')\right] \cdot e^{j(2\pi\Delta f \cdot t' + \Delta\phi)} \quad v_\varepsilon(t') = R_\varepsilon(t') \cdot e^{j\left(0\frac{\pi}{2}\right)} \cdot e^{j(2\pi\Delta f \cdot t' + \Delta\phi)} \quad (27a)$$

$$t' = 1 \cdot \frac{T_S}{2} : \quad v_\varepsilon(t') = \left[j \cdot I_\varepsilon(t')\right] \cdot e^{j(2\pi\Delta f \cdot t' + \Delta\phi)} \quad v_\varepsilon(t') = I_\varepsilon(t') \cdot e^{j\left(1\frac{\pi}{2}\right)} \cdot e^{j(2\pi\Delta f \cdot t' + \Delta\phi)} \quad (27b)$$

$$t' = 2 \cdot \frac{T_S}{2} : \quad v_\varepsilon(t') = \left[-R_\varepsilon(t')\right] \cdot e^{j(2\pi\Delta f \cdot t' + \Delta\phi)} \quad v_\varepsilon(t') = R_\varepsilon(t') \cdot e^{j\left(2\frac{\pi}{2}\right)} \cdot e^{j(2\pi\Delta f \cdot t' + \Delta\phi)} \quad (27c)$$

$$t' = 3 \cdot \frac{T_S}{2} : v_\varepsilon(t') = \left[-j \cdot I_\varepsilon(t')\right] \cdot e^{j(2\pi\Delta f \cdot t' + \Delta\phi)} \quad v_\varepsilon(t') = I_\varepsilon(t') \cdot e^{j\left(3\frac{\pi}{2}\right)} \cdot e^{j(2\pi\Delta f \cdot t' + \Delta\phi)} \quad (27d)$$

Die Zusammenfassungen $R_\varepsilon(t')$ und $I_\varepsilon(t')$ stellen gemäß Gleichung (24) und (25) reellwertige Tiefpaßsignale dar, die aufgrund der statistischen Verteilung der Symbolfolgen $a_R(n)$ und $a_I(n)$ entweder positiv oder negativ sein können. Im folgenden werden sie jeweils durch die zeitabhängige reellwertige Amplitude $A(t')$ beschrieben. Damit ergibt sich für das Ausgangssignal $v_\varepsilon(t')$ der Verzögerungseinheit 11 zu den einzelnen Zeitpunkten $t' = \mu \cdot \dfrac{T_s}{2}$ ($\mu$=0,1,2,... 2·$N$ -1) anstelle von zeitpunktbezogenen Einzelgleichungen (27a), (27b), (27c) und (27d) eine einzige alle Zeitpunkte beinhaltende mathematische Gleichung (28) für das Ausgangssignal $v_\varepsilon(t')$ der Verzögerungseinheit 11:

$$v_\varepsilon\left(t'\right) = A\left(t'\right) \cdot e^{j\left(\mu\frac{\pi}{2}\right)} \cdot e^{j(2\pi\Delta f \cdot t' + \Delta\varphi)} \quad \text{für} \quad t' = \mu \cdot \frac{T_s}{2} \qquad (28)$$

Wird das zeitdiskrete Ausgangssignal $v_\varepsilon(t')$ der Verzögerungseinheit 11 zu den einzelnen Abtastzeitpunkten $t' = \mu \cdot \dfrac{T_s}{2}$ $\mu$=0,1,2,...2·$N$-1 in seiner Phase um einen zeitpunktbezogenen Phasenwinkel $-\mu \cdot \dfrac{T_s}{2}$ phasenverschoben, so entsteht aus dem zeitdiskrete Ausgangssignal $v_\varepsilon(t')$ der Verzögerungseinheit 11 ein phasenverschobenes zeitdiskretes Signal w(t') gemäß Gleichung (29), das gegenüber dem zeitdiskrete Ausgangssignal $v_\varepsilon(t')$ der Verzögerungseinheit 11 um den komplexen Term $e^{j\mu\frac{T_s}{2}}$ befreit ist:

$$w\left(t'\right) = A\left(t'\right) \cdot e^{j(2\pi\Delta f \cdot t' + \Delta\varphi)} \qquad (29)$$

Da die Amplitude $A(t')$ des Signals $w(t')$ positive und negative Werte annehmen kann, ist eine Betragsbildung der Amplitude $A(t')$ vorzunehmen. Eine Betragsbildung der Amplitude eines komplexen Signals erfolgt durch Quadrierung und mit anschließender Division durch den Betrag. Die Phase des komplexen Signals wird durch diesen Vorgang verdoppelt, der Betrag bleibt jedoch unverändert.

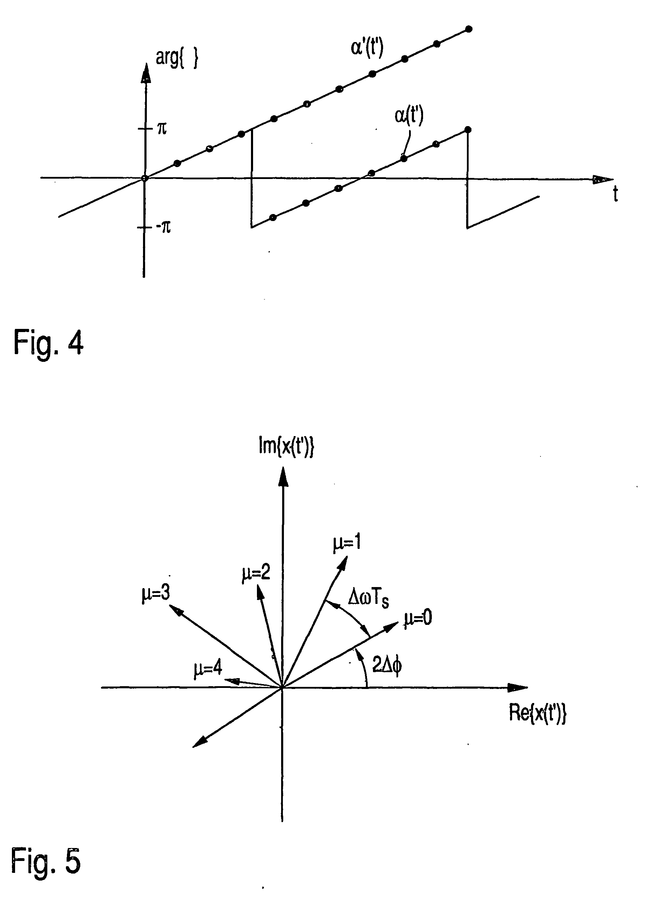

Die Anwendung der Quadrierung und der anschließenden Division durch den Betrag auf das Signal $w(t')$ führt zum Signal $x(t')$ gemäß Gleichung (30), welches als zeitdiskreter komplexer Drehzeiger mit einer zeitdiskreten Amplitude $|A(t')|$ und einer zeitdiskreten Phase 2·(2$\pi\Delta f t' + \Delta\varphi$)=2·($\Delta\omega\mu T_s + \Delta\varphi$) im Sinne von Fig. 5 interpretiert werden kann und die für eine Maximum-Likelihood-Schätzung des Frequenz- und Phasenversatzes des Träger-signals geeignete Form gemäß Gleichung (26) aufweist:

$$x\left(t'\right) = \left|A\left(t'\right)\right| \cdot e^{j2(2\pi\Delta f \cdot t' + \Delta\varphi)} + n(t') \qquad (30)$$

Weiterhin wird in Gleichung (30) noch die additive Störung n(t') berücksichtigt, welche in guter Näherung unkorreliert und gaußverteilt ist. Damit erhält man den optimalen Schätzwert für $\Delta f$ und $\Delta\varphi$ durch Maximierung der Maximum-Likelihood-Funktion $L(\Delta f, \Delta\varphi)$, die gemäß Gleichung (31) einer Maximierung der Realteile aller zeitdiskreten komplexen Drehzeiger des Signals $x(t')$ entspricht, kann ein Schätzwert $\Delta\hat{f}$ und $\Delta\hat{\varphi}$ für den Frequenz- und Phasenversatz des Trägersignals ermittelt werden.

$$L(\Delta\hat{f}, \Delta\hat{\varphi}) = \mathrm{Re}\left\{\sum_\mu x(t' = \mu\frac{T_s}{2}) \cdot e^{-j2(2\pi\Delta\hat{f}\mu\frac{T_s}{2} + \Delta\hat{\varphi})}\right\} \qquad (31)$$

Die Maximierung der Realteile aller zeitdiskreten komplexen Drehzeiger des Signals *x(t')* kann als ein "Zurückdrehen" der zeitdiskreten komplexen Drehzeiger des Signals *x(t')* jeweils um den Phasenwinkel

$$2 \cdot \left( 2\pi\Delta f\, \mu \frac{T_s}{2} + \Delta\varphi \right),$$ bis diese mit der Realachse in der komplexen Ebene zusammenfallen, interpretiert werden.

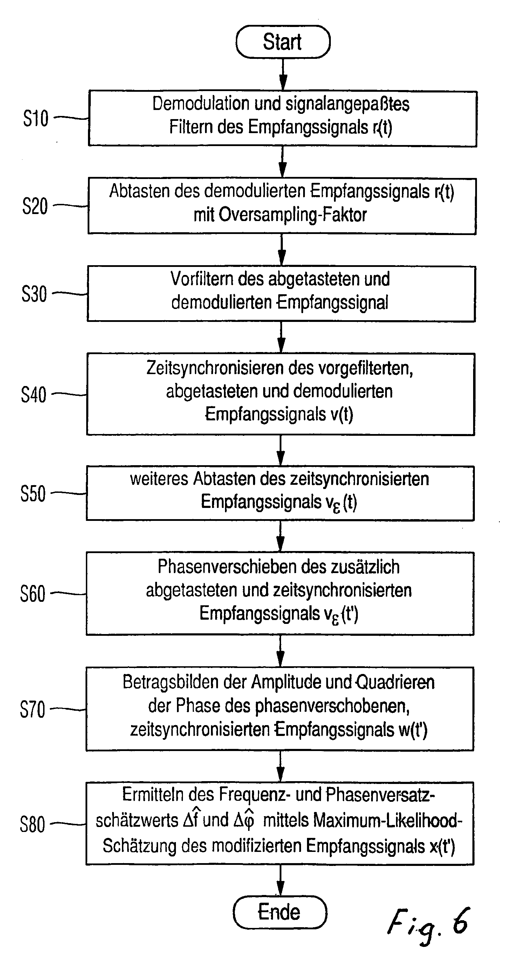

Ausgehend von dieser Herleitung der mathematischen Grundlagen erfolgt im folgenden die Beschreibung der erfindungsgemäßen Vorrichtung zur Trägerfrequenzsynchronisierung bei einem offset-QPSK-modulierten Signal gemäß Fig. 3 und des erfindungsgemäßen Verfahrens zur Trägerfrequenzsynchronisierung bei einem Offset-QPSK-modulierten Signal gemäß Fig. 6.

In der erfindungsgemäßen Vorrichtung in Fig. 3 wird das taktsynchronisierte Ausgangssignal $v_\varepsilon \cdot (t)$ der Verzögerungseinheit in einem im folgenden als erstes Abtast- und Halteglied bezeichnetes Abtast- und Halteglied 12 auf zwei Abtastwerte pro Symbolperiode $T_S$ unterabgetastet.

Das Ausgangssignal $v_\varepsilon(t')$ des ersten Abtast- und Halteglieds 12 wird einem komplexen Multiplizierer 13 zugeführt, im dem es eine abtastzeitpunktbezogene Phasen-verschiebung um den Phasinwinkel $-\mu \cdot \dfrac{T_s}{2}$ erfährt.

Das somit in seiner Phase gegenüber dem Signal $v_\varepsilon(t')$ phasenverschobene Ausgangssignal *w(t')* des komplexen Multiplizierers 13 wird einer Einheit zur betragsnormierten Quadrierung 14, bestehend aus einem Quadrierer und mit nachgeschalteter Division durch den Betrag, zugeführt, in dem eine Betragsbildung seiner Amplitude und eine Verdopplung seiner Phase erfolgt.

Das Signal am Ausgang der Einheit zur betragsnormierten Quadrierung 14 stellt das modifizierte Empfangssignal *x(t')* dar, das die Signalverarbeitungseinheit 15 aus dem taktsynchronisierten Empfangssignal $v_\varepsilon \cdot (t)$ durch Unterabtastung im ersten Abtast- und Halteglied 12, durch Phasenverschiebung im komplexen Multiplizierer 13 und durch Betragsbildung der Amplitude bzw. Verdopplung der Phase in der Einheit zur betragsnormierten Quadrierung 14 erzeugt hat.

Aus dem zeitdiskreten modifizierten Empfangssignals *x(t')* werden in einem anschließenden Maximum-Likelihood-Schätzer 16 die Schätzwerte $\widehat{\Delta f}$ und $\widehat{\Delta\varphi}$ für den Frequenz- und Phasenversatz des Trägersignals, wie beispielsweise in der DE 103 09 262 A1 beschrieben, ermittelt.

Für einen Maximum-Likelihood-Schätzer kann beispielsweise ein in der DE 103 09 262 A1 offenbarter Frequenz- und Phasenversatz-Schätzer benutzt werden, der auftretende $2 \cdot \pi$-Sprünge im Phasenverlauf - sogenannte "cycle slips" - vermeidet, welche durch kleine Amplituden des zeitdiskreten modifizierten Empfangssignals *x(t')* aus den überlagerten Störungen bei einer Phasenregression resultieren. Damit ist die Phasenregression für diese Anwendung unbrauchbar.

Im folgenden wird das erfindungsgemäße Verfahren zur Trägerfrequenzsynchronisierung eines Offset-QPSK-modulierten Signals auf der Basis von Fig. 6 beschrieben.

Der Verfahrensschritt S10 des erfindungsgemäßen Verfahrens zur Trägerfrequenzsynchronisierung eines Offset-QPSK-modulierten Signals in Fig. 6 führt eine Demodulation des Empfangssignals r(t) gemäß Gleichung (7) durch. Gleichzeitig mit der Demodulation erfolgt durch entsprechende Auslegung des Empfangs- zum Senderfilter eine signalangepaßt Filterung des Empfangssignals r(t), die zu einer Optimierung des Signal-Rausch-Abstands im Empfangssignal r(t) führt.

Im darauffolgenden Verfahrensschritt S20 wird das Empfangssignal r(t) mit einem Oversampling-Faktor von typischerweise acht in einer zweiten Abtastung abgetastet.

Das abgetastete Empfangssignal wird im Verfahrensschritt S30 einer Vorfilterung gemäß Gleichung (17) zugeführt, die datenabhängige Jitter im Empfangssignal r(t) minimiert.

Eine Zeitsynchronisierung des abgetasteten, gefilterten und demodulierten Empfangssignals v(t) erfolgt im nächsten Verfahrensschritt S40 gemäß Gleichung (23) mittels einer Verzögerungseinheit, die den geschätzten Timingversatz $\hat{\varepsilon}$ von einem hier nicht näher beschriebenen Schätzer erhält.

Im darauffolgenden Verfahrensschritt S50 erfolgt eine zusätzliche Abtastung - eine erste Abtastung - des zeitsynchronisierten Empfangssignals $v_\varepsilon(t)$ auf zwei Abtastwerte pro Symbolperiode $T_s$ gemäß Gleichung (28).

Eine abtastzeitpunktbezogene Phasenverschiebung des zusätzlich abgetasteten zeitsynchronisierten Empfangs signals $v_\varepsilon(t')$ mittels komplexer Multiplikation mit einem abtastzeitpunktbezogenen Multiplikationsfaktor $e^{-j\mu\frac{T_s}{2}}$ zur Kompensation des jeweils inversen komplexen Faktors $e^{j\mu\frac{T_s}{2}}$ im Empfangssignal $v_\varepsilon(t')$ gemäß Gleichung (29) erfolgt im darauffolgenden Verfahrensschritt S60.

Der nächste Verfahrensschritt S70 beinhaltet die Betragsbildung der zeitdiskreten Amplituden *A(t')* und Quadrierung der zeitdiskreten Phasen $2\pi\Delta ft'+\Delta\varphi$ des phasenverschobenen, zusätzlich abgetasteten und zeitsynchronisierten Empfangssignals *w(t')* gemäß Gleichung (30).

Das in den Verfahrensschritten S50, S60 und S70 mittels einer Signalverarbeitungseinheit 15 aus dem zeitsynchronisierten Empfangssignal $v_\varepsilon(t)$ gewonnene zeitdiskrete modifizierte Empfangssignal *x·(t')* wird im darauffolgenden Verfahrensschritt S80 zur Ermittlung seines zeitdiskreten, phasenkontinuierlichen Phasenverlauf α'·(t') herangezogen.

Im Verfahrensschritt S80 erfolgt die Ermittlung des Frequenzversatz- und des Phasenversatzschät zwertes $\hat{\Delta f}$ und $\hat{\Delta \varphi}$ des Trägersignals mittels Maximum-Likelihood-Schätzung gemäß Gleichung (31). Hierzu wird das modifizierte Empfangssignal *x(t')* herangezogen. Der zum Einsatz kommende Maximum-Likelihood-Schätzer sollte optimalerweise auftretende Phasensprünge - sogenannte "cycle-slips" - aufgrund von Störsignalen, die sich dem modifizierten Empfangssignal $v_\varepsilon(t)$ bei kleinen Amplituden des modifizierten Empfangssignals $v_\varepsilon(t)$ überlagern, beherrschen können und ist beispielsweise in der DE 103 09 262 A1 offenbart.

**Patentansprüche**

1. Verfahren zur Trägerfrequenzsynchronisierung eines mit einem Frequenz- und/oder einem Phasenversatz (Δf, Δφ) behafteten Trägersignals ($e^{j(2\pi(f_T+\Delta f)1+\Delta\varphi)}$) mittels Schätzung des Frequenz- und/oder Phasenversatzes (Δf, Δφ) des Trägersignals ($e^{j(2\pi(f_T+\Delta f)t+\Delta\varphi)}$) durch Maximum-Likelihood-Schätzung (S90) aus einem Empfangssignal (*r·(t')*) mit zeitdiskreten komplexen Drehzeigern ($|r(t')|·e^{j2\pi\Delta\cdot f\cdot t'+\Delta\varphi}$), bei denen einzig die zeitdiskreten Phasen ($2\pi\Delta ft'+\Delta\varphi$) vom Frequenz- und/oder Phasenversatz (Δf, Δφ) abhängig sind,
   **dadurch gekennzeichnet,**
   **daß** das Empfangssignal (*r(t')*) ein Offset-Quadraturmoduliertes Empfangssignal *(v_s(t'))* ist, das für die Maximum-Likelihood-Schätzung über eine Vorfilterung zu einem modifizierten Empfangssignal (*x(t')*) mit zeitdiskreten komplexen Drehzeigern ($|r(t')|·e^{j2(2\pi\Delta f\cdot t'+\Delta\varphi)}$) umgeformt wird, bei denen einzig die zeitdiskreten Phasen ($2\cdot(2\pi\Delta ft'+\Delta\varphi)$) vom Frequenz- und/oder Phasenversatz (Δf, Δφ) abhängig sind und deren Realteile zur Maximum-Likelihood-Schätzung (S90) des Frequenz- und/oder Phasenversatzes (Δf, Δφ) maximiert werden.

2. Verfahren zur Trägerfrequenzsynchronisierung nach Anspruch 1,
   **dadurch gekennzeichnet,**
   **daß** die Umformung (S50, S60, S70) des Offset-Quadraturphasenmodulierten Empfangssignals ($v_\varepsilon·(t')$) aus einer ersten Abtastung (S50) auf zwei Abtastwerte pro Symbolperiode ($T_S$), einer komplexen Multiplikation (S60) und einer betragsnormierten Quadrierung (S70) besteht.

3. Verfahren zur Trägerfrequenzsynchronisierung nach Anspruch 2,
   **dadurch gekennzeichnet,**
   **daß** die komplexe Multiplikation (S60) mit dem komplexen Phasenwinkel $e^{-j\mu\frac{\pi}{2}}$ erfolgt, wobei μ der Abtastindex ist.

4. Verfahren zur Trägerfrequenzsynchronisierung nach Anspruch 2,
   **dadurch gekennzeichnet,**
   **daß** die betragsnormierte Quadrierung (S70) durch Quadrierung und inverse Betragsbildung erfolgt.

5. Verfahren zur Trägerfrequenzsynchronisierung nach einem der Ansprüche 2 bis 4,
   **dadurch gekennzeichnet,**
   **daß** der Umformung (S50, S60, S70) des Offset-Quadraturmodulierten Empfangssignals ($v_\varepsilon(t')$) eine Demodulation (S10), eine zweite Abtastung (S20), eine Vorfilterung (S30) und eine Taktsynchronisierung (S40) vorausgeht.

6. Verfahren zur Trägerfrequenzsynchronisierung nach einem der Ansprüche 2 bis 5,
   **dadurch gekennzeichnet,**
   **daß** der Umformung (550, S60, S70) des Offset-Quadraturmodulierten Empfangssignals ($v_\varepsilon(t')$) eine Maximum-Likelihood-Schätzung (S80) des Frequenz- und Phasenversatzes (Δf, Δφ) des Trägersignals ($e^{j(2\pi(f_T+\Delta f)t+\Delta\varphi)}$) nachfolgt.

7. Vorrichtung zur Trägerfrequenzsynchronisierung eines mit einem Frequenz- und/oder einem Phasenversatz (Δf, Δφ) behafteten Trägersignals ($e^{j(2\pi(f_T+\Delta f)t+\Delta\varphi)}$) mit einem Maximum-Likelihood-Schätzer (18) zur Schätzung des Frequenz- und/oder Phasenversatzes (Δf, Δφ) des Trägersignals ($e^{j(2\pi(f_T+\Delta f)t+\Delta\varphi)}$) aus einem Empfangssignal (*r(t')*) mit zeitdiskreten komplexen Drehzeigern ($|r(t')|·e^{j2\pi\Delta f\cdot t+\Delta\varphi}$), bei denen einzig die zeitdiskreten Phasen ($2\pi\Delta ft'+\Delta\varphi$)

vom Frequenz- und/oder Phasenversatz ($\Delta$f, $\Delta\varphi$) abhängen,

**dadurch gekennzeichnet,**

**daß** dem Maximum-Likelihood-Schätzer (16) ein Vorfilter (10) und eine Signalverarbeitungs-Einheit (15) vorgeschaltet ist, die das Empfangssignal ($r \cdot (t')$), welches ein Offset-quadraturphasenmoduliertes Empfangssignal ($v_\varepsilon(t')$) ist, zu einem modifizierten Empfangssignal ($x(t')$) mit zeitdiskreten komplexen Drehzeigern ($|r(t')| \cdot e^{j2(2\pi\Delta f \cdot t' + \Delta\varphi)}$) um-formt, bei denen einzig die zeitdiskreten Phasen ($2\pi\Delta f t' + \Delta\varphi$) vom Frequenz- und/oder Phasenversatz ($\Delta$f, $\Delta\varphi$) abhängen, und

**daß** der Maxmimum-Likelihood-Schätzer (16) die Realteile der komplexen Drehzeiger ($|r(t')| \cdot e^{j2(2\pi\Delta f \cdot t' + \Delta\phi)}$) zur Schät-zung des Frequenz- und/oder Phasenversatzes ($\Delta$f, $\Delta\varphi$) maximiert.

8. Vorrichtung zur Trägerfrequenzsynchronisierung nach Anspruch 7,
   **dadurch gekennzeichnet,**
   **daß** die Signalverarbeitungseinheit (15) aus einer ersten Abtast-Einheit (12), einem komplexer Multiplizierer (13) und einer Einheit zur betragsnormierten Quadrierung (14) besteht.

9. Vorrichtung zur Trägerfrequenzsynchronisierung nach Anspruch 8,
   **dadurch gekennzeichnet,**
   **daß** die Einheit zur betragsnormierten Quadrierung (14) aus einem Quadrierer und einem parallel geschalteten Betragsbilder und einem den Quadrierer und Betragsbilder nachgeschalteten Dividierer besteht.

10. Vorrichtung zur Trägerfrequenzsynchronisierung nach einem der Ansprüche 7 bis 9,
    **dadurch gekennzeichnet,**
    **daß** der Signalverarbeitungseinheit (15) ein Demodulator eine Verzögerungseinheit (11) zur Taktsynchronisierung vorgeschaltet sind.

11. Vorrichtung zur Trägerfrequenzsynchronisierung nach einem der Ansprüche 7 bis 10,
    **dadurch gekennzeichnet,**
    **daß** dem Vorfilter (10) eine zweite Abtast-Sinheit (9) vorgeschaltet ist.

12. Vorrichtung zur Trägerfrequenzsynchronisierung nach einem der Ansprüche 7 bis 11,
    **dadurch gekennzeichnet,**
    **daß** der Signalverarbeitungseinheit (15) ein Maximum-Likelihood-Schätzer (16) nachgeschaltet ist.

**Claims**

1. Method for carrier-frequency synchronisation of a carrier signal ($e^{j(2\pi(f_T + \Delta f)t + \Delta\varphi)}$) influenced by a frequency and/or phase offset ($\Delta$f, $\Delta\varphi$) by estimating the frequency and/or phase offset ($\Delta$f, $\Delta\varphi$) of the carrier signal ($e^{j(2\pi(f_T + \Delta f)t + \Delta\varphi)}$) by means of maximum-likelihood estimation (S90) from a received signal ($r(t')$) with time-discrete, complex rotary phasors ($|r(t')| \cdot e^{j2\pi\Delta f \cdot t' + \Delta\phi}$), wherein only the time-discrete phases ($2\pi\Delta f t' + \Delta\varphi$) are dependent upon the frequency and/or phase offset ($\Delta$f, $\Delta\varphi$),
   **characterised in that**
   the received signal *(r(t'))* is an offset-quadrature-modulated received signal *($v_\varepsilon(t')$),* which is converted for the maximum-likelihood estimation via a pre-filtering into a modified received signal *(x(t'))* with time-discrete, complex rotary phasors ($|r(t')| \cdot e^{j2(2\pi\Delta f \cdot t' + \Delta\phi)}$), wherein only the time-discrete phases ($2 \cdot (2\pi\Delta f t' + \Delta\varphi)$) are dependent upon the frequency and/or phase offset ($\Delta$f, $\Delta(\varphi)$, and the real components are maximised for the maximum-likelihood estimation (S90) of the frequency and/or phase offset ($\Delta$f, $\Delta\varphi$).

2. Method for carrier-frequency synchronisation according to claim 1,
   **characterised in that**
   the conversion (S50, S60, S70) of the offset quadrature-phase-modulated received signal ($v_\varepsilon(t')$) consists of a first sampling (S50) of two sampled values per symbol period ($T_s$), a complex multiplication (S60) and a modulus-scaled squaring (S70).

3. Method for carrier-frequency synchronisation according to claim 2,
   **characterised in that**

the complex multiplication (S60) is implemented with the complex phase angle $e^{-j\mu\frac{\pi}{2}}$, wherein $\mu$ is the sampling index.

4. Method for carrier-frequency synchronisation according to claim 2,
   **characterised in that**
   the modulus-scaled squaring (S70) is implemented by squaring and inverse modulus formation.

5. Method for carrier-frequency synchronisation according to any one of claims 2 to 4,
   **characterised in that**
   the conversion (S50, S60, S70) of the offset quadrature-modulated received signal ($v_\varepsilon(t')$) is preceded by a demodulation (S10), a second sampling (S20), a pre-filtering (S30) and a clock-pulse synchronisation (S40).

6. Method for carrier-frequency synchronisation according to any one of claims 2 to 5,
   **characterised in that**
   the conversion (S50, 560, S70) of the offset quadrature-modulated received signal ($v_\varepsilon(t')$) is followed by a maximum-likelihood estimation (S80) of the frequency and phase offset ($\Delta f$, $\Delta\varphi$) of the carrier signal ($e^{j(2\pi(f_T+\Delta f)t+\Delta\varphi)}$).

7. Device for carrier-frequency synchronisation of a carrier signal ($e^{j(2\pi(f_T+\Delta f)t+\Delta\varphi)}$) influenced by a frequency and/or phase offset ($\Delta f$, $\Delta\varphi$) with a maximum-likelihood estimator (18) for estimating the frequency and/or phase offset ($\Delta f$, $\Delta\varphi$) of the carrier signal ($e^{j(2\pi(f_T+\Delta f)t+\Delta\varphi)}$) from a received signal ($r(t')$) with time-discrete complex rotary phasors ($|r(t')|\cdot e^{j2\pi\Delta f\cdot t'+\Delta\varphi}$, wherein only the time-discrete phases ($2\pi\Delta ft'+\Delta\varphi$) are dependent upon the frequency and/or phase offset ($\Delta f$, $\Delta\varphi$),
   **characterised in that**
   a pre-filter (10) and a signal-processing unit (15), which convert the received signal ($r(t')$), which is an offset quadrature-phase-modulated received signal ($v_\varepsilon(t')$), into a modified received signal ($x(t')$) with time-discrete, complex rotary phasors ($|r(t')|\cdot e^{j2(2\pi\Delta f\cdot t'+\Delta\phi)}$), wherein only the time-discrete phases ($2\pi\Delta ft'+\Delta\varphi$) are dependent upon the frequency and/or phase offset ($\Delta f$, $\Delta\varphi$), are connected upstream of the maximum-likelihood estimator (18), and
   that the maximum-likelihood estimator (18) maximises the real components of the complex rotary phasors ($|r(t')|\cdot e^{j2\pi\Delta f\cdot t'+\Delta\phi}$) for the estimation of the frequency and/or phase offset ($\Delta f$, $\Delta\varphi$).

8. Device for carrier-frequency synchronisation according to claim 7,
   **characterised in that**
   the signal-processing unit (15) consists of a first sampling unit (12), a complex multiplier (13) and a unit for modulus-scaled squaring (14).

9. Device for carrier-frequency synchronisation according to claim 8,
   **characterised in that**
   the unit for modulus-scaled squaring (14) consists of a squarer and parallel-connected modulus-former and a divider connected downstream of the squarer and modulus-former.

10. Device for carrier-frequency synchronisation according to any one of claims 7 to 9,
    **characterised in that**
    a demodulator and a delay unit (11) for clock-pulse synchronisation are connected upstream of the signal-processing unit (15).

11. Device for carrier-frequency synchronisation according to any one of claims 7 to 10,
    **characterised in that**
    a second sampling unit (9) is connected upstream of the pre-filter (10).

12. Device for carrier-frequency synchronisation according to any one of claims 7 to 11,
    **characterised in that**
    a maximum-likelihood estimator (18) is connected downstream of the signal-processing unit (15).

**Revendications**

1. Procédé pour synchroniser une fréquence porteuse d'un signal porteur ($e^{j(2\pi t fr + \Delta f)t+\Delta\phi)}$) assorti d'un décalage de fréquence et/ou de phase ($\Delta f$, $\Delta\phi$ au moyen de l'estimation du décalage de la fréquence et/ou de la phase $\Delta f$, $\Delta\phi$) du signal porteur ($e^{j(2\pi(f_T\cdot\Delta f)f+\Delta\phi)}$) par une estimation selon le maximum de vraisemblance (S90) sur la base d'un signal de réception ($r(t')$) avec des phaseurs complexes à valeurs discrètes en temps ($|r(t')|\cdot e^{j2\pi\Delta f\cdot t'+\Delta\phi}$), dans lesquels seules les phases à valeurs discrètes en temps $(2\pi\Delta f t'+\Delta\phi)$ sont dépendantes du décalage de la fréquence et/ou de la phase ($\Delta f$, $\Delta\phi$),
   **caractérisé en ce**
   **que** le signal de réception ($r(t')$)$_{est}$ un signal de réception modulé en quadrature de phase à décalage ($v_\varepsilon(t')$) qui, pour l'estimation selon le maximum de vraisemblance, est transformé par l'intermédiaire d'un filtrage amont en un signal de réception modifié ($x(t')$) avec des phaseurs complexes à valeurs discrètes en temps ($|r(t')|\cdot e^{j2(2\pi\Delta f\cdot t'+\Delta\phi)}$), dans lesquels scules les phases à valeurs discrètes en temps $(2\cdot(2\pi\Delta f t'+\Delta\phi))$ sont dépendantes du décalage de la fréquence et/ou du la phase ($\Delta f$, $\Delta\phi$) et dont les parties réelles sont maximisées pour l'estimation selon le maximum de vraisemblance (S90) du décalage de la fréquence et/ou de la phase ($\Delta f$, $\Delta\phi$).

2. Procédé pour synchroniser une fréquence porteuse selon la revendication 1,
   **caractérisé en ce**
   **que** la transformation (S50, 560, S70) du signal de réception modulé en quadrature de phase à décalage ($v_{s\cdot}(t')$) comprend un premier échantillonnage (S50) portant sur deux valeurs d'échantillonnage par période symbolique ($T_s$), une multiplication complexe (S60) et une élévation au carré normée (S70).

3. Procédé pour synchroniser une fréquence porteuse selon la revendication 2,
   **caractérisé en ce**

   **que** la multiplication complexe (S60) est effectuée avec l'angle de phase complexe $e^{-j\mu\frac{\pi}{2}}$, où $\mu$ est l'index d'échantillonnage.

4. Procédé pour synchroniser une fréquence porteuse selon la revendication 2,
   **caractérisé en ce**
   **que** l'élévation au carré normée (S70) est effectuée par l'élévation au carré et le passage à l'inverse de la valeur absolue.

5. Procédé pour synchroniser une fréquence porteuse selon l'une quelconque des revendications 2 à 4,
   **caractérisé en ce**
   **que** la transformation (S50, S60, S70) du signal de réception modulé en quadrature à décalage ($v_\varepsilon(t')$) précède une démodulation (S10), un second échantillonnage (S20), un filtrage amont (S30) et une synchronisation d'horloge (S40).

6. Procédé pour synchroniser une fréquence porteuse selon l'une quelconque des revendications 2 à 5,
   **caractérisé en ce**
   **que** la transformation (S50, S60, S70) du signal de réception modulé en quadrature à décalage ($v_\varepsilon(t')$) suit une estimation selon le maximum de vraisemblance (S80) du décalage de fréquence et de phase ($\Delta f$, $\Delta\phi$) du signal porteur ($e^{j(2\pi(fT+\Delta f)t+\Delta\phi)}$).

7. Dispositif pour synchroniser une fréquence porteuse d'un signal porteur $e^{j(2\pi(f_T+\Delta f)t+\Delta\phi)}$ assorti d'un décalage de fréquence et/ou de phase ($\Delta f$, $\Delta\phi$) avec un moyen d'estimation selon le maximum de vraisemblance (18) pour estimer le décalage de fréquence et/ou de phase ($\Delta f$, $\Delta\phi$) du signal porteur ($e^{j(2\pi f_T+\Delta f)t+\Delta\phi)}$) sur la base d'un signal de réception ($r(t')$ avec des phaseurs complexes à valeurs discrètes en temps ($|r(t')|\cdot e^{j2\pi\Delta f\cdot t'+\Delta\phi}$),dans lesquels seules les phases discrètes en temps $(2\pi\Delta f t'+\Delta\phi)$ dépendent du décalage de la fréquence et/ou de la phase ($\Delta f$, $\Delta\phi$),
   **caractérisé en ce**
   **qu'**en amont du moyen d'estimation selon le maximum de vraisemblance (16) sont montés un filtre amont (10) et une unité de traitement de signal (15), qui transforment le signal de réception ($r(t')$), lequel est un signal de réception modulé en quadrature de phase à décalage ($v_\varepsilon(t')$), en un signal de réception modifié ($x(t')$) avec des phaseurs complexes à valeurs discrètes en temps ($|r(t')|\cdot e^{j2(2\pi\Delta f\cdot t'+\Delta\phi)}$), dans lesquels seules les phases à valeurs discrètes en temps $(2\pi\Delta f t'+\Delta\phi)$ dépendent du décalage de la fréquence et/ou de la phase ($\Delta f$, $\Delta\phi$), et

en ce que le moyen d'estimation selon le maximum de vraisemblance (16) maximise les parties réelles des phaseurs complexes ($|r(t')| \cdot e^{j2(2\pi\Delta f \cdot t' + \Delta\phi)}$) pour l'estimation du décalage de la fréquence et/ou de la phase ($\Delta f$, $\Delta\varphi$).

8. Dispositif pour synchroniser une fréquence porteuse selon la revendication 7,
   **caractérisé en ce**
   **que** l'unité de traitement de signal (15) comprend une première unité d'échantillonnage (12), un multiplicateur complexe (13) et une unité permettant l'élévation au carré normée (14).

9. Dispositif permettant de synchroniser une fréquence porteuse selon la revendication 8,
   **caractérisé en ce**
   **que** l'unité permettant l'élévation au carré normée (14) comprend un moyen d'élévation au carré, un moyen de formation de valeur absolue monté en parallèle et un diviseur monté en aval du moyen d'élévation au carré et du moyen de formation de valeur absolue.

10. Dispositif pour synchroniser une fréquence porteuse selon l'une quelconque des revendications 7 à 9,
    **caractérisé en ce**
    **qu'**en amont de l'unité de traitement de signal (15) il est monté un démodulateur et une unité de retardement (11) pour la synchronisation d'horloge.

11. Dispositif pour synchroniser une fréquence porteuse selon l'une quelconque des revendications 7 à 10,
    **caractérisé en ce**
    **qu'**en amont du filtre amont (10) il est monté une seconde unité d'échantillonnage (9).

12. Dispositif pour synchroniser une fréquence porteuse selon l'une quelconque des revendications 7 à 11,
    **caractérisé en ce**
    **qu'**en aval de l'unité de traitement de signal (15) est monté un moyen d'estimation selon le maximum de vraisemblance (16).

Fig. 1

Fig. 2

Fig. 3

EP 1 794 967 B1

Fig. 4

Fig. 5

Start

S10 — Demodulation und signalangepaßtes
Filtern des Empfangssignals r(t)

S20 — Abtasten des demodulierten Empfangssignals r(t)
mit Oversampling-Faktor

S30 — Vorfiltern des abgetasteten und
demodulierten Empfangssignal

S40 — Zeitsynchronisieren des vorgefilterten,
abgetasteten und demodulierten
Empfangssignals v(t)

S50 — weiteres Abtasten des zeitsynchronisierten
Empfangssignals $v_\varepsilon(t)$

S60 — Phasenverschieben des zusätzlich
abgetasteten und zeitsynchronisierten
Empfangssignals $v_\varepsilon(t')$

S70 — Betragsbilden der Amplitude und Quadrieren
der Phase des phasenverschobenen,
zeitsynchronisierten Empfangssignals w(t')

S80 — Ermitteln des Frequenz- und Phasenversatzschätzwerts $\Delta\hat{f}$ und $\Delta\hat{\varphi}$ mittels Maximum-Likelihood-
Schätzung des modifizierten Empfangssignals x(t')

Ende

*Fig. 6*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10309262 A1

**In der Beschreibung aufgeführte Nicht-Patentliteratur**

- **K.SCHMIDT.** Digitale Taktrückgewinnung für band- breiteneffiziente Mobilfunksysteme. 1994